# FASCICULE DE BREVET EUROPEEN

(11) **EP 3 393 750 B1**
(45) Date de publication et mention de la délivrance du brevet: **24.11.2021**
(21) Numéro de dépôt: 16831504.2
(22) Date de dépôt: 21.12.2016
(51) Int. Cl.: B29C 48/49, B29C 48/41, B29C 48/21, B29D 30/00, B29B 7/20

(54) **INSTALLATION ET PROCÉDÉ POUR EXTRUDER DES MÉLANGES DE CAOUTCHOUC**
VORRICHTUNG UND VERFAHREN ZUM EXTRUDIEREN VON KAUTSCHUKMISCHUNGEN
APPARATUS AND METHOD FOR EXTRUDING RUBBER MIXTURES

(30) Priorité: 22.12.2015 FR 1563085
(43) Date de publication de la demande: 31.10.2018
(73) Titulaire: Compagnie Générale des Etablissements Michelin, 63000 Clermont-Ferrand (FR)
(72) Inventeur: OUGIER, Christophe, 63040 Clermont-Ferrand Cedex 9 (FR); LETOCART, Arnaud, 63040 Clermont-Ferrand Cedex 9 (FR)
(74) Mandataire: Redouté, Gilles Pierre
(86) Numéro de dépôt international: PCT/FR2016/053623
(87) Numéro de publication internationale: WO 2017/109419

(56) Documents cités:
- EP-A1- 0 091 705
- DE-U1- 29 604 647
- JP-A- H1 015 940
- JP-B2- 4 535 884
- US-A- 5 076 777
- US-A1- 2012 150 299

## Description

L'invention concerne le domaine de l'extrusion des mélanges de caoutchouc plus particulièrement destinés à la fabrication des pneumatiques. Plus particulièrement, elle concerne la fabrication profilé coextrudé à base de mélanges de caoutchouc de différentes compositions.

De manière connue, une installation de fabrication des profilés complexes par extrusion d'au moins deux mélanges de caoutchouc de compositions différentes, ou coextrusion, comprend au moins deux extrudeuses. Chaque extrudeuse est formée d'un corps cylindrique ou fourreau qui est fixe à l'intérieur duquel se trouve une vis coaxiale à l'axe longitudinal du fourreau et entraînée en rotation autour de celui-ci. Elle a pour fonction d'homogénéiser et de pousser un mélange caoutchouteux vers un orifice de sortie. Pour un produit complexe, l'orifice de sortie reçoit plusieurs mélanges de caoutchouc de compositions différentes et définit le profil de la bande de caoutchouc. Ce profil est défini par une lame profilée fixe ou une paroi profilée fixe coopérant avec un rouleau rotatif.

La fabrication de pneumatiques fait de plus en plus appel à l'utilisation de produits complexes afin de diminuer le nombre de poses de produits en assemblage et de diminuer ainsi le coût et accroître la précision.

Le nombre de mélanges caoutchouteux différents utilisés pour fabriquer un seul pneumatique a tendance à augmenter de manière à pouvoir augmenter les propriétés du pneumatique en fonction de la zone dans laquelle ces mélanges sont localisés. Par exemple, à une bande de roulement de pneumatique qui comportait en général deux mélanges caoutchouteux différents, on rajoute actuellement d'autres mélanges, par exemple un mélange électriquement conducteur et des mélanges destinés à recouvrir les flancs aux niveaux des épaules.

Lors d'une fabrication par coextrusion, on fait converger les mélanges vers l'orifice de sortie ce qui fait qu'on réalise un collage à cru, en pression et en température des mélanges, sans contact à l'air libre et avant profilage. Ceci permet d'obtenir une bonne tenue du produit coextrudé au niveau des interfaces entre les mélanges. Or, de par le fait que les propriétés rhéologiques diffèrent d'un mélange à un autre, il est difficile de maîtriser parfaitement la géométrie de l'ensemble, en cause étant notamment la difficulté de positionnement d'un produit d'un certain mélange par rapport à un autre.

Le positionnement d'un produit par rapport à un autre est donné par un dispositif de profilage dans lequel arrivent les différents mélanges en provenance de différentes extrudeuses afin de former le profilé complexe coextrudé en sortie. En pratique, la forme géométrique et les dimensions du dispositif de profilage sont déterminés par plusieurs boucles d'itération successives. Une fois le dispositif mis au point, il ne donne les résultats escomptés que lorsque les extrudeuses fonctionnent en régime continu et à une vitesse bien déterminée.

Le profilé coextrudé non-conforme représente actuellement une part non négligeable de la production de la machine. Plus les tirages sont courts dans l'optique d'une production flexible, plus les taux de chute sont élevés (5% à 20% en pratique). Il en résulte une baisse de la rentabilité de la machine. Par ailleurs, les pertes de matière étant économiquement inacceptables, les chutes dites mixtes (ou multi-composés) doivent être stockées, réhomogénéisées et réintroduites de façon maitrisée, précisément dosée, dans les productions suivantes. Le surcoût de fabrication que cela engendre s'accompagne, de surcroit, d'une baisse des performances du produit finalement obtenu qui est en partie pollué par les autres mélanges.

Par ailleurs, on contrôle le produit coextrudé en continu, en mesurant le poids linéaire du produit sortant et en le comparant à un poids préétabli. De plus, on évalue la forme et les dimensions du produit complexe (largeur, épaisseur) à l'aide de différents capteurs.

On connait ainsi le document WO 2015/028166 qui décrit une méthode de fabrication de bande de roulement pour pneumatique par coextrusion de mélanges différents en provenance de plusieurs extrudeuses agencées en parallèles, dans laquelle le profil transversal est analysé par des capteurs sans contact. Le profil de chaque partie constituant la bande est lu par un capteur, les profils étant analysés ensuite par une unité centrale de contrôle qui commande le fonctionnement de chaque extrudeuse. Le réglage du fonctionnement d'une extrudeuse se fait en ajustant la vitesse de rotation de la vis et la pression en bout de la vis, juste avant la sortie. Toutefois, son fonctionnement dépend également de la mise en régime thermique du mélange, de la mise en régime thermique de la filière, de la vitesse d'extrusion, de la rhéologie du mélange, de la perturbation de l'alimentation de la bande, etc. Tous ces facteurs perturbent le débit de l'extrudeuse, ce qui fait que de nombreux réglages sont nécessaires avant d'obtenir un produit conforme.

Par ailleurs, les mesures effectuées avec des capteurs optiques ne suffisent toutefois pas pour garantir le bon positionnement à l'intérieur du produit complexe des différents constituants, l'un par rapport à l'autre, ni de visualiser de leurs interfaces respectives, surtout quand ils sont superposés. De ce fait, une dernière vérification se fait par prélèvement d'échantillons. Les échantillons prélevés lors de toutes ces mises au point ne peuvent pas être recyclés car il s'agit d'un ensemble composite et ils sont jetés, ce qui génère des pertes de matière et augmente le coût global des produits obtenus.

On connait également le document US5725814 qui décrit un agencement de plusieurs extrudeuses comportant chacune en sortie une pompe à engrenages pour réaliser un produit complexe à base de différentes matières plastiques. Un tel agencement permet d'utiliser une régulation basée sur l'ajustement de la vitesse de la pompe pour varier la proportion d'un matériau par rapport à un autre lors de la fabrication du complexe. L'inconvénient majeur d'une telle solution est l'encombrement important de la pompe à engrenage, ce qui impacte directement la taille de l'outillage de mise en forme, et ceci d'autant plus lorsque le nombre de voies est supérieur à deux. Les outillages sont alors coûteux, difficiles à manipuler et la mise en régime thermique est plus longue. JP 4 535884 B2 et JP H10 15940 A décrivent d'autres installations et procédés d'extrusion destinés à la fabrication d'un profilé coextrudé P pour pneumatiques réalisé à base de mélanges de caoutchouc de différentes compositions.

Le but de l'invention est de remédier à ces inconvénients.

Cet objectif est atteint avec une installation d'extrusion destinée à la fabrication d'un profilé coextrudé P pour pneumatiques réalisé à base de mélanges de caoutchouc de différentes compositions, comportant un dispositif de profilage agencé en sortie d'au moins deux canaux d'écoulement de mélanges caoutchouteux de composition différente, caractérisée en ce lesdits canaux reçoivent les mélanges en provenance d'extrudeuses volumétriques bi-vis contrarotatives à filets interpénétrés et profils conjugués.

L'installation d'extrusion de l'invention comporte au moins deux extrudeuses volumétriques bi-vis contrarotatives à filets interpénétrés et profils conjugués, indépendantes, qui permettent de convoyer de manière précise, à débit maîtrisé, deux mélanges différents dans des canaux d'écoulement qui débouchent dans un dispositif de profilage afin de réaliser un profilé complexe par coextrusion. On obtient ainsi un produit profilé coextrudé, par superposition de différents mélanges lors du passage à travers le dispositif de profilage, qui présente un profil précis et répétable dans le temps.

Plus particulièrement, chaque extrudeuse volumétrique bi-vis, connue par ailleurs sous le nom de pompe bi-vis, comprend deux vis dont les filets s'interpénètrent et ont des profils conjugués, le vis étant entraînées en rotation en sens contraires ce qui permet de convoyer le mélange dans deux chambres en C fermées et délimitées par l'espace entre chaque vis et le fourreau. L'avancée des chambres se fait de la valeur du pas du filet par tour de rotation de la vis, ce qui permet d'avoir un débit constant, qui est indépendant du coefficient de frottement du mélange sur les parois du fourreau et s'affranchit donc de facteurs tels la rhéologie du mélange, sa pression, sa température, etc. De par la géométrie spécifique des vis de l'extrudeuse, une telle avancée des chambres permet une alimentation volumétrique des canaux d'alimentation de la filière d'extrusion. Ceci permet d'ajuster facilement le débit d'écoulement en ajustant la vitesse de chaque extrudeuse, ce qui assure un fonctionnement stable et répétitif de l'installation.

Ainsi, comme pour chaque constituant du profilé coextrudé, la forme géométrique est donnée par le dispositif de profilage et le débit du mélange est donné par l'extrudeuse de convoyage du mélange jusqu'au dispositif, en utilisant une extrudeuse bi-vis pour alimenter chaque voie ou canal d'écoulement menant au dispositif de profilage, on obtient un profilé coextrudé ayant une bonne précision de sa forme géométrique et de ses dimensions et ceci dès les premières longueurs de bande de profilée extrudée.

Selon l'invention, lesdites extrudeuses bi-vis sont agencées de manière à ce que chacune débite directement dans un canal d'écoulement. Ceci permet d'obtenir un dispositif de profilage à plusieurs voies ayant une valeur optimisée de la section dans la direction d'extrusion. En effet, la hauteur de la section d'entrée dans les canaux d'écoulement dans lesquels débouchent les deux mélanges qui arrivent selon la direction d'extrusion est très réduite pour une valeur maximale du débit fourni par les extrudeuses bi-vis. De surcroît, le mélange ne change pas de direction, ce qui minimise le gonflement du produit coextrudé.

Avantageusement, chaque extrudeuse bi-vis est alimentée par une extrudeuse secondaire à une seule vis.

On peut également utiliser une autre unité de plastification du mélange en amont des extrudeuses bi-vis, tels un mélangeur bi-vis. On préfère toutefois utiliser une extrudeuse car elle permet d'alimenter les chambres de l'extrudeuse bi-vis avec du mélange fluidifié et homogénéisé. L'extrudeuse peut ainsi être prévue avec des doigts homogénéisateurs lorsqu'on veut fournir encore plus de travail au mélange.

De préférence, l'extrudeuse bi-vis et l'extrudeuse secondaire sont agencées dans un boîtier commun.

Ceci permet un transfert direct du mélange plastifié par l'extrudeuse secondaire à l'extrudeuse bi-vis, sans faire appel à des dispositifs et actionneurs supplémentaires, ce qui compliquerait la construction et augmenterait le prix de l'installation.

Avantageusement, l'extrudeuse secondaire comporte une extrémité de sortie qui communique avec un orifice d'entrée central dans une chambre interne de l'extrudeuse bi-vis.

Ceci permet d'alimenter en mélange de manière équilibrée, via un orifice d'entrée placé selon l'axe longitudinal médian de l'extrudeuse bi-vis.

De préférence, l'extrudeuse bi-vis et l'extrudeuse secondaire comportent chacune ses propres moyens d'entraînement.

Dans une variante, on utilise un moyen d'entraînement en rotation commun aux deux extrudeuses, car plus économique. On préfère toutefois d'entraîner par des moyens indépendants chaque extrudeuse de manière à pouvoir ajuster de manière indépendante les paramètres de fonctionnement de chacune.

Avantageusement, l'axe de rotation de la vis de l'extrudeuse secondaire est transversal à l'axe de rotation des vis de l'extrudeuse bi-vis.

Un tel agencement des extrudeuses à axes perpendiculaires permet d'obtenir un ensemble compact, de faible encombrement. On peut ainsi alimenter en parallèle plusieurs voies du dispositif de profilage avec de tels ensembles d'extrudeuses.

De préférence, l'installation comprend une unité de contrôle prévue pour ajuster la vitesse de rotation des vis desdites extrudeuses bi-vis en fonction de dimensions du profilé coextrudé.

L'extrudeuse bi-vis a un débit intrinsèque connu qui est proportionnel à sa vitesse de rotation. L'unité de contrôle permet de l'adapter aux dimensions du profilé coextrudé. Dans une variante, un capteur de poids relié à l'unité de contrôle mesure en continu le poids du profilé coextrudé, ce qui permet d'ajuster de manière fine le poids au mètre du profilé.

Avantageusement, ladite unité de contrôle ajuste la vitesse de rotation des vis desdites extrudeuses bi-vis pour l'adapter aux conditions de fonctionnement d'une ligne d'assemblage connexe.

L'installation de l'invention est tout particulièrement avantageuse dans le cas de la préparation de profilé coextrudé qui est intégrée à l'assemblage. Dans ce cas, la vitesse de défilement du produit est variable, car elle dépend de celle de la ligne d'assemblage, et le fonctionnement est amené à alterner les phases de marche avec celles d'arrêt de l'installation. On adapte ainsi le fonctionnement de l'installation à celle de la ligne d'assemblage simplement en commandant les vitesses des extrudeuses bi-vis.

Les buts de l'invention sont également atteints avec un procédé de fabrication d'un profilé coextrudé P pour pneumatiques réalisé à base de mélanges de caoutchouc de différentes compositions par extrusion en passant à travers un outillage de profilage en provenance de deux canaux d'écoulement de mélange, caractérisé en ce qu'il comprend une étape d'alimentation desdits canaux réalisée par des extrudeuses volumétriques bi-vis contrarotatives à filets interpénétrés et profils conjugués.

Avantageusement, le procédé de l'invention comprend une étape de réglage de la vitesse de rotation des vis de l'extrudeuse bi-vis en fonction des dimensions du profilé coextrudé P.

De préférence, le débit fourni par chaque extrudeuse bi-vis est supérieur à 20kg/min pour une vitesse inférieure ou égale à 40tr/min. Ceci permet une bonne productivité pour des vitesses faibles de rotation tout en évitant l'échauffement du mélange.

La description qui suit s'appuie sur les figures 1 à 6 dans lesquelles :
- la figure 1 illustre de manière schématique en perspective une installation d'extrusion selon un exemple de réalisation de l'invention ;
- la figure 2 est une vue en coupe réalisée avec un plan passant par l'axe longitudinal X-X' de l'extrudeuse secondaire (40) ;
- les figures 3a et 3b illustrent, par des vues en coupe, des exemples de réalisation des vis qui équipent les extrudeuses vi-vis de l'installation de l'invention ;
- la figure 4 est une vue en coupe réalisée avec un plan contenant les axes longitudinaux des vis des extrudeuses bi-vis ;
- la figure 5 est une vue à échelle agrandie d'une partie de l'installation de la figure 1 ;
- la figure 6 est une vue schématique en coupe d'un dispositif de profilage alimenté par des extrudeuses selon l'état de la technique.

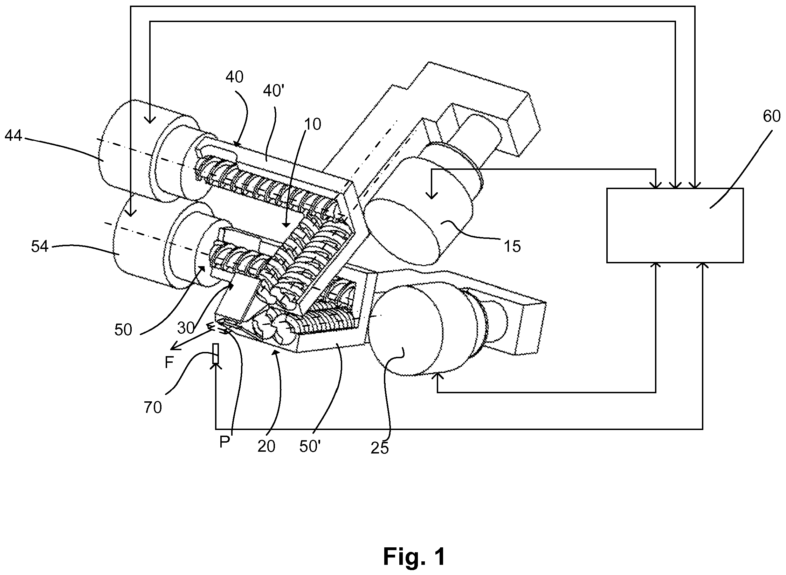

L'installation d'extrusion représentée sur la figure 1 comprend une première extrudeuse secondaire 40 et une deuxième extrudeuse secondaires 50 qui sont des extrudeuses comportant une vis d'Archimède. Ces extrudeuses sont munies chacune, à une extrémité d'entrée 42, respectivement 52, d'une trémie d'alimentation 41, respectivement 51, en un mélange de caoutchouc cru A et B, les deux mélanges ayant des compositions différentes. Chaque extrudeuse secondaire 40, 50 comprend une vis 45, 55 entraînée en rotation autour de son axe longitudinal X-X', Y-Y', par un motoréducteur 44,54 à l'intérieur d'un fourreau de section circulaire 46, 56. Chaque mélange de caoutchouc A, B est mixé, mis en pression et température, homogénéisé avant d'arriver à l'extrémité de sortie 43, 53 de l'extrudeuse.

L'installation d'extrusion comprend également un dispositif de profilage 30 ayant un orifice d'extrusion 31, dont la section transversale donne la forme géométrique au profilé coextrudé. Le dispositif de profilage comporte à cet effet une voûte supérieure 36 et une voûte inférieure 37 délimitant avec un support intermédiaire 38 deux canaux d'écoulement 34, 35 chacun d'un des mélanges A et B en provenance de l'extrudeuse 40 et de l'extrudeuse 50. Les canaux 34 et 35 débouchent sur un même orifice d'extrusion 31 au travers lequel les deux mélanges A et B sont refoulés. L'orifice d'extrusion 31 est délimité par les parois du dispositif de profilage 30 et permet de conférer à l'ensemble constitué par les mélanges coextrudés le profil souhaité.

Par gomme, caoutchouc ou élastomère, on entend de préférence tout type d'élastomère, diénique ou non diénique par exemple thermoplastique, ou un mélange d'élastomères : caoutchouc naturel et caoutchouc synthétique, de charges renforçantes : noir de carbone et silice, de plastifiants : huiles, résines, et d'autres éléments chimiques comme le soufre par exemple.

L'installation d'extrusion de l'invention vise à réaliser un profilé coextrudé à base de mélanges différents. De tels mélanges d'élastomères différents sont, à titre d'exemple les mélanges élastomères ou de gomme utilisés pour créer un ensemble de bande de roulement tels : un premier matériau en caoutchouc naturel à 100% pour réaliser une sous-couche avec un, puis un deuxième matériau pour réaliser la bande de roulement en caoutchouc synthétique à 100%. On peut rajouter un troisième, voire un quatrième matériau pour réaliser les flancs composé d'un mélange de caoutchouc naturel/ caoutchouc synthétique (20% à 80% de caoutchouc naturel).

Selon l'invention, l'installation d'extrusion comprend des extrudeuses volumétriques bi-vis 10, 20 ou pompes bi-vis, appelées dans ce qui suit extrudeuses bi-vis, agencées entre les extrudeuses secondaires 40, 50 et le dispositif de profilage 30. Les extrudeuses bi-vis sont du type contrarotatives à filets interpénétrés et profils conjugués, et sont agencées de manière à déboucher chacune directement dans le canal d'écoulement 34, respectivement 35 du dispositif de profilage 30. Chaque extrudeuse bi-vis 10, 20 est alimentée par une extrudeuse secondaire 40, 50, l'extrémité de sortie 46, 56 de cette dernière étant en communication avec un orifice d'entrée dans une chambre interne de de l'extrudeuse bi-vis. L'extrudeuse 10 comprend deux vis 11,12 tournant chacune autour d'un axe longitudinal parallèle à celui du canal d'écoulement 34. L'extrudeuse 20 comprend deux vis 21,22 tournant chacune autour d'un axe longitudinal parallèle à celui du canal d'écoulement 35.

Une extrudeuse bi-vis présente une grande compacité pour un débit donné à une température donnée. Ainsi, une extrudeuse bi-vis utilisée dans l'installation de l'invention présente un diamètre d de chaque vis 11,12 ou 21,22 de 100 mm, un taux d'entaillement (on comprend le rapport entre le diamètre de la partie centrale et le diamètre externe de la vis) proche de 50%, un rapport longueur diamètre L/d égal à 4, un pas égal à 100mm, pour un débit d'environ 22 kg/min à une vitesse d'environ 40 tr/min.

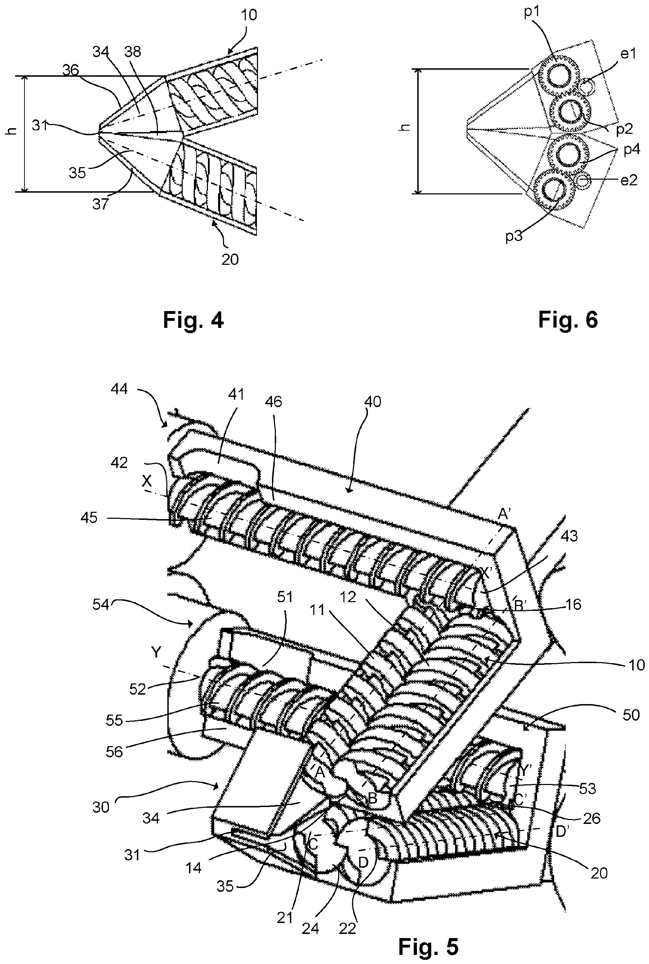

Tel n'est pas le cas d'une extrudeuse à pompe d'engrenages de l'état de la technique. Pour mieux mettre en évidence cette différence, on a illustré à la figure 6 une installation de coextrusion qui utiliserait des pompes à engrenages de l'état de la technique. Lorsque l'on compare la solution de l'invention, tel que visible à la fig. 4 et une installation à pompes à engrenages de l'état de la technique (fig. 6), on observe que, pour un encombrement équivalent « h » (on comprend la hauteur de la section d'entrée dans les canaux d'écoulement dans lesquels débouchent les deux mélanges dans la direction d'extrusion), une pompe à engrenages, alimentée par une extrudeuse e1, e2, devrait avoir des pignons p1, p2, p3, p4 d'un diamètre de 50mm, une largeur de 175mm, avec un taux d'entaillement de 20% maximum. Une vitesse de rotation élevée à 80 tr/min (soit une vitesse tangentielle de 210 mm/s dans le cas de l'extrudeuse bi-vis) ne donnerait que 11 kg/min. Le cisaillement moyen serait en revanche 4 fois supérieur, et en pratique, on devrait limiter les valeurs du débit à 5 kg/min pour limiter l'échauffement qui est amené à dégrader, voire à vulcaniser, un mélange élastomère cru. En outre, la pompe à engrenages implique des fuites latérales ou une étanchéité sur les bords des pignons difficile à réaliser compte tenu des pressions de fonctionnement. Ce problème est résolu dans le cas d'une extrudeuse bi-vis, puisque seule la chambre de coté de l'admission fait l'objet d'une étanchéité vers l'extérieur (coté moto-réducteur).

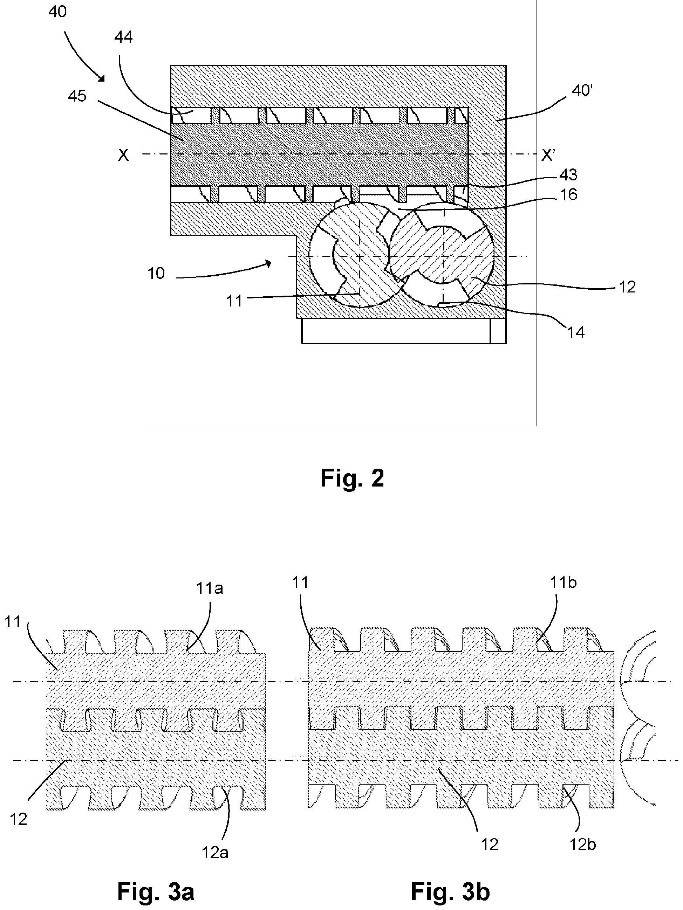

Plus particulièrement, dans l'exemple illustré aux figures, l'extrudeuse ou pompe bi-vis 10 comprend deux vis 11, 12 d'axes parallèles A-A' et B-B' qui sont, dans l'exemple décrit, perpendiculaires à l'axe X-X' de l'extrudeuse secondaire 40. Les vis 11, 12 sont agencées côte-à-côte dans un boîtier qui présente une chambre interne 14 ayant une section transversale en forme de huit (fig. 2). Les vis 11, 12 ont chacune un filet de section sensiblement rectangulaire et constant sur la longueur de la vis, elles sont agencées de manière à s'engrener, les profils des deux vis 11, 12 étant conjugués et constituent, avec la chambre 14, des moyens de transfert à débit constant du mélange de caoutchouc entre une entrée d'alimentation en provenance de l'extrudeuse 40 et sa sortie via le canal d'écoulement 34. Les profils des vis 11 et 12 présentent ainsi un jeu très faible dans la région centrale de l'extrudeuse 10, on comprend une région proche d'un axe longitudinal médian passant à mi-distance des axes A-A' et B-B', ce qui fait que les deux vis sont pratiquement étanches au mélange dans cette région, alors qu'elles forment des chambres en forme de C avec la périphérie de la chambre 14.

Le mélange caoutchouteux arrive par un orifice d'entrée central 16 en provenance de l'extrudeuse secondaire 40. Les vis 11, 12 sont entraînées en rotation autour de leurs axes A-A' et B-B' en sens contraires par un motoréducteur 15 à deux arbres de sortie situés chacun dans le prolongement des axes A-A' et B-B' pour faire avancer le mélange caoutchouteux vers la sortie de l'extrudeuse 10 par laquelle il arrive dans le canal 34.

De manière similaire à la précédente, l'extrudeuse ou pompe bi-vis 20 comprend deux vis 21, 22 d'axes parallèles C-C' et D-D' qui sont, dans l'exemple décrit, perpendiculaires à l'axe Y-Y' de l'extrudeuse secondaire 50. Les vis 21, 22 sont agencées côte-à-côte dans un boîtier qui présente une chambre interne 24 ayant une section transversale en forme de huit. Les vis 21, 22 ont chacune un filet de section sensiblement rectangulaire et constant sur la longueur de la vis, elles sont agencées de manière à s'engrener, les profils des deux vis 21, 22 étant conjugués et constituent, avec la chambre 14, des moyens de transfert à débit constant du mélange de caoutchouc entre une entrée d'alimentation en provenance de l'extrudeuse 50 et sa sortie via le canal d'écoulement 35. Les profils des vis 21 et 22 présentent ainsi un jeu très faible dans la région centrale de l'extrudeuse 20, on comprend une région proche d'un axe longitudinal médian passant à mi-distance des axes C-C' et D-D', ce qui fait que les deux vis sont pratiquement étanches au mélange dans cette région, alors qu'elles forment des chambres en forme de C avec la périphérie de la chambre 24. Le mélange caoutchouteux arrive par un orifice d'entrée central 26 en provenance de l'extrudeuse secondaire 50. Les vis 21, 22 sont entraînées en rotation autour de leurs axes C-C' et D-D' en sens contraires par un motoréducteur 25 à deux arbres de sortie situés chacun dans le prolongement des axes C-C' et D-D' pour faire avancer le mélange caoutchouteux vers la sortie de l'extrudeuse 20 par laquelle il arrive dans le canal 35.

Le profil et les dimensions de la chambre 14, respectivement 24, sont conçus pour correspondre avec ceux des vis 11 et 12, respectivement 21 et 22. Plus particulièrement, un jeu faible existe entre la périphérie des filets des vis et la chambre, ce jeu radial étant compris entre 0,05 à 0,2mm.

Dans l'exemple illustré aux figures, les vis 11, 12, respectivement 21, 22 sont identiques, elles ont chacune deux filets hélicoïdaux de section trapézoïdale et un pas p constant sur la longueur de la vis, elles sont agencées de manière à s'engrener, les profils des deux vis 11, 12, et 21, 22, étant conjugués. La largeur d'un creux entre deux flancs de filets est égale à la largeur du flanc de manière à ce qu'un flanc s'ajuste à l'intérieur du creux de la vis en vis-à-vis. A titre d'exemple, le jeu entre deux flancs adjacents des vis 11 et 12 est d'environ 0,3mm.

Les chambres en forme de C formées à l'intérieur de la chambre 14, respectivement 24, sont limitées vers l'extérieur par les parois de la chambre 14, respectivement 24 et latéralement par les filets des vis 11 et 12, respectivement 21 et 22. Dans la zone dans laquelle les filets des vis adjacentes 11 et 12, respectivement 21 et 22, s'engrènent l'un avec l'autre, les chambres en C sont séparées par effet d'étanchéité.

Dans une variante, les filets des vis 11, 12 et 21, 22 ont un pas variable, le pas dans la zone d'alimentation, qui communique avec les extrudeuses 40, 50, ayant la plus petite valeur.

Le transfert de chaque mélange d'élastomères vers la filière d'extrusion ou dispositif de profilage 30 effectué par les extrudeuses bi-vis 10, 20 se fait à débit constant à travers les canaux d'écoulement 34, 35.

La pression d'alimentation en mélange en provenance de l'une des extrudeuses 40, 50 est supérieure à la pression atmosphérique et elle choisie de manière à être suffisante pour vaincre la perte de charge à travers la filière d'extrusion ou dispositif de profilage 30.

Dans une variante, la pression d'alimentation en sortie de l'une ou l'autre des extrudeuses 40, 50 est suffisamment élevée, par exemple égale à environ 200 bars, en étant choisie de manière à vaincre la perte de charge subie par le mélange lors du passage à travers les canaux d'écoulement 34, 35 et la filière d'extrusion, et elle est gardée sensiblement constante par l'extrudeuse ou pompe bi-vis 10, respectivement 20.

Dans une autre variante, la pression d'alimentation en sortie de l'une ou l'autre des extrudeuses 40, 50, est plus faible, par exemple d'environ 2 bars et la pression en sortie de l'extrudeuse ou pompe bi-vis 10, respectivement 20, est augmentée par cette dernière à environ 200 bars.

Dans encore une autre variante, la pression d'alimentation est élevée et sa valeur en sortie est augmentée encore par l'extrudeuse ou pompe bi-vis.

Les figures 3a et 3b illustrent deux modes préférées de réalisation des filets des vis des extrudeuses bi-vis 10, 20. Les filets des vis 11, 12 de la figure 3a ont une forme sensiblement trapézoïdale avec des flancs 11a, 12a de forme concave. Les filets des vis 11, 12 de la figure 3b ont une forme sensiblement trapézoïdale avec des flancs 11b, 12b de forme convexe. Ces filets assurent une meilleure étanchéité des chambres en C et donc un meilleur rendement de l'extrudeuse bi-vis.

Les vis 11, 12 et 21, 22 des extrudeuses bi-vis 10 et 20 sont du type monofilet ou, dans une variante elles peuvent présenter plusieurs filets. Les filets ont de préférence un pas constant. Dans une variante, par exemple lorsqu'on veut monter en pression, le pas peut être variable.

Tel que mieux visible à la fig. 2, la première extrudeuse secondaire 40 et la première extrudeuse bi-vis 10 sont agencées dans un boîtier commun 40'. De ce fait, l'extrudeuse secondaire 40 travaille et fait monter en pression le premier mélange A et le transfère ensuite directement à l'extrudeuse bi-vis 10 via un orifice central 16. Il en est de même pour l'extrudeuse secondaire 50 et la deuxième extrudeuse bi-vis 20 qui sont agencées dans un boîtier commun 50', le mélange sous pression étant transmis de la première vers la deuxième via l'orifice central 26.

Les deux extrudeuses bi-vis 10 et 20 sont agencées en parallèle en étant juxtaposées (on comprend qu'elles sont de même côté, tel que vu par rapport à un plan vertical passant par l'orifice de sortie 31) pour converger dans le dispositif de profilage 30. L'axe longitudinal A-A' (respectivement B-B') de l'extrudeuse bi-vis 10 fait un angle aigu avec l'axe C-C' (respectivement D-D') de l'extrudeuse bi-vis 20. Le profilé coextrudé P est obtenu par coextrusion en faisant passer deux flux séparés de mélange, un premier en provenance de l'extrudeuse bi-vis 10 volumétrique via le canal d'écoulement 34, et un deuxième en provenance de l'extrudeuse bi-vis 20 volumétrique via le canal d'écoulement 35, à travers le dispositif de profilage 30 défile dans le sens de la flèche F en étant tiré par un rouleau motorisé (non illustré). Dans une variante le dispositif de profilage coopère avec un rouleau rotatif (non illustré) sur lequel est posé le produit coextrudé P.

L'installation comprend également une unité de contrôle 60 qui est apte à ajuster la vitesse de rotation des vis 11,12 et des vis 21, 22 des extrudeuses bi-vis 10 et 20 en fonction de dimensions du profilé coextrudé P. Les dimensions du profilé coextrudé P, notamment la largeur et l'épaisseur, sont préétablies et mesurées à l'aide d'un capteur 70, par exemple un capteur optique. Le capteur 70 est relié à l'unité de contrôle 60 à laquelle il transmet le signal de mesure afin de permettre la mise au point des dimensions du dispositif de profilage en début d'opération. Une fois la mise au point réalisée, le capteur 70 vérifie les dimensions du profilé coextrudé et sa conformité avec des dimensions préétablies. Dans une variante, un capteur de poids mesure le poids du profilé co-extrudé P et ajuste de manière encore plus fine les tolérances du produit coextrudé.

L'unité de contrôle 60 actionne, en fonction des dimensions souhaitées du profilé coextrudé P ou en fonction du régime de fonctionnement (vitesse variable, conditions de marche et arrêt) les motoréducteurs 15 et 25.

Les extrudeuses bi-vis 10 et 20 font convoyer le mélange à travers les chambres en C périphériques de manière à ce que la matière contenue dans les chambres avance de la valeur du pas du filet par tour de rotation. De ce fait, l'ajustement de la vitesse de rotation des vis de chaque extrudeuses bi-vis 10, 20 est directement proportionnelle avec la variation de son débit. Ceci permet à l'unité de commande 60 d'ajuster le débit de chaque extrudeuse en fonction de dimensions du produit coextrudé et également de le maintenir constant en fonctionnement.

L'unité de contrôle 60 est reliée également aux motoréducteurs 44 et 54 des extrudeuses secondaires 40 et 50 et elle est apte à commander la vitesse de rotation des vis 42 ou 52. Cette commande se fait en synchronisme avec la commande des motoréducteurs 15, 25, sur la base de rapports préétablis de manière expérimentale. Dans une variante, la vitesse de rotation des vis des extrudeuses secondaires se fait en fonction des données reçues des capteurs de pression situés dans la voute de chaque extrudeuse secondaire.

L'unité de contrôle 60 peut également être reliée aux moyens de tirage de la bande de profilé coextrudé P pour en ajuster la vitesse.

D'autres variantes et modes de réalisation de l'invention peuvent être envisagées sans sortir du cadre de ces revendications.

Ainsi, l'extrudeuse bi-vis peut être alimentée directement par un mélange de caoutchouc. Pour ceci, les vis sont modifiées de manière à présenter une partie d'entrée et d'alimentation qui assure le convoyage et le travail du mélange avant d'arriver dans les chambres de dosage en C.

L'installation de l'invention peut comporter plusieurs extrudeuses bi-vis agencées en parallèle pour réaliser un produit profilé coextrudé à base de plusieurs mélanges non vulcanisés de composition différente.

Dans une variante, le dispositif de profilage comporte un ou plusieurs canaux d'écoulement alimentés directement par une extrudeuse à une seule vis et d'autres canaux alimentés par des (deux ou plusieurs) extrudeuses bi-vis volumétriques selon l'invention.

## Revendications

1. Installation d'extrusion destinée à la fabrication d'un profilé coextrudé P pour pneumatiques réalisé à base de mélanges de caoutchouc de différentes compositions, comportant un dispositif de profilage (30) agencé en sortie d'au moins deux canaux d'écoulement (34,35) de mélanges caoutchouteux de composition différente, **caractérisée en ce que** lesdits canaux reçoivent les mélanges en provenance d'extrudeuses volumétriques bi-vis (10,20) contrarotatives à filets interpénétrés et profils conjugués.

2. Installation selon la revendication 1, **caractérisée en ce que** chaque extrudeuse bi-vis (10,20) est alimentée par une extrudeuse secondaire (40,50) à une seule vis.

3. Installation selon la revendication 2, **caractérisée en ce que** l'extrudeuse bi-vis (10,20) et l'extrudeuse secondaire (40,50) sont agencées dans un boîtier commun (40' ,50').

4. Installation selon la revendication 3, **caractérisée en ce que** l'extrudeuse secondaire (40,50) comporte une extrémité de sortie (43,53) qui communique avec un orifice d'entrée central (16,26) dans une chambre interne (14,24) de l'extrudeuse bi-vis (10,20).

5. Installation selon l'une des revendications 2 à 4, **caractérisée en ce que** l'extrudeuse bi-vis (10,20) et l'extrudeuse secondaire (40, 50) comportent chacune ses propres moyens d'entraînement.

6. Installation selon l'une des revendications 2 à 5, **caractérisée en ce que** l'axe de rotation (X-X' ; Y-Y') de la vis de l'extrudeuse secondaire (40,50) est transversal à l'axe de rotation (A-A',B-B' ; C-C',D-D') des vis de l'extrudeuse bi-vis (10, 20).

7. Installation selon l'une des revendications précédentes, **caractérisée en ce qu'**elle comprend une unité de contrôle (60) prévue pour ajuster la vitesse de rotation des vis desdites extrudeuses bi-vis (10,20) en fonction de dimensions du profilé coextrudé.

8. Installation selon la revendication 7, caractérisé en ce ladite unité de contrôle (60) ajuste la vitesse de rotation des vis desdites extrudeuses bi-vis (10,20) pour l'adapter aux conditions de fonctionnement d'une ligne d'assemblage connexe.

9. Procédé de fabrication d'un profilé coextrudé P pour pneumatiques réalisé à base de mélanges de caoutchouc de différentes compositions par extrusion en passant à travers un outillage de profilage (30) en provenance de deux canaux d'écoulement (34,35) de mélange, **caractérisé en ce qu'**il comprend une étape d'alimentation desdits canaux réalisée par des extrudeuses volumétriques bi-vis (10,20) contrarotatives à filets interpénétrés et profils conjugués.

10. Procédé selon la revendication 9, **caractérisé en ce qu'**il comprend une étape de réglage de la vitesse de rotation des vis de l'extrudeuse bi-vis (10,20) en fonction de dimensions du profilé coextrudé P.

11. Procédé selon l'une des revendications 9 ou 10, **caractérisé en ce que** le débit fourni par chaque extrudeuse bi-vis (10, 20) est supérieur à 20kg/min pour une vitesse inférieure ou égale à 40tr/min.

## Patentansprüche

1. Extrusionsanlage zur Herstellung eines coextrudierten Profils P für Reifen, das auf der Basis von Gummigemischen unterschiedlicher Zusammensetzungen hergestellt wird, umfassend eine Profilierungsvorrichtung (30), die am Ausgang von mindestens zwei Fließkanälen (34,35) für Gummigemische unterschiedlicher Zusammensetzung angeordnet ist, **dadurch gekennzeichnet, dass** diese Kanäle die Gemische aus volumetrischen gegenläufigen Doppelschneckenextrudern (10,20) mit interpenetrierenden Gewinden und konjugierten Profilen erhalten.

2. Anlage nach Anspruch 1, **dadurch gekennzeichnet, dass** jeder Doppelschneckenextruder (10,20) von einem sekundären Einschneckenextruder (40,50) beschickt wird.

3. Anlage nach Anspruch 2, **dadurch gekennzeichnet, dass** der Doppelschneckenextruder (10,20) und der sekundäre Extruder (40,50) in einem gemeinsamen Gehäuse (40',50') angeordnet sind.

4. Anlage nach Anspruch 3, **dadurch gekennzeichnet, dass** der sekundäre Extruder (40,50) ein Auslassende (43,53) umfasst, das mit einer zentralen Einlassöffnung (16,26) in eine innere Kammer (14,24) des Doppelschneckenextruders (10,20) kommuniziert.

5. Anlage nach einem der Ansprüche 2 bis 4, **dadurch gekennzeichnet, dass** der Doppelschneckenextruder (10,20) und der sekundäre Extruder (40,50) jeweils ihre eigenen Antriebseinrichtungen aufweisen.

6. Anlage nach einem der Ansprüche 2 bis 5, **dadurch gekennzeichnet, dass** die Rotationsachse (X-X'; Y-Y') der Schnecke des sekundären Extruders (40,50) quer zur Rotationsachse (A-A',B-B'; C-C',D-D') der Schnecke des Doppelschneckenextruders (10,20) verläuft.

7. Anlage nach einem der vorhergehenden Ansprüche, **dadurch gekennzeichnet, dass** sie eine Steuereinheit (60) zum Einstellen der Drehzahl der Schnecken der Doppelschneckenextruder (10,20) je nach den Abmessungen des coextrudierten Profils umfasst.

8. Anlage nach Anspruch 7, **dadurch gekennzeichnet, dass** die Steuereinheit (60) die Drehzahl der Schnecken der Doppelschneckenextruder (10,20) so einstellt, dass sie an die Betriebsbedingungen einer verbundenen Montagestraße angepasst sind.

9. Verfahren zur Herstellung eines coextrudierten Profils P für Reifen, das auf der Basis von Gummigemischen unterschiedlicher Zusammensetzungen hergestellt wird, durch Extrusion mittels Durchlaufen eines Profilierungswerkzeugs (30) aus zwei Fließkanälen (34,35) für Gemisch, **dadurch gekennzeichnet, dass** es einen Schritt des Beschickens dieser Kanäle durch zwei volumetrische gegenläufige Doppelschneckenextruder (10,20) mit interpenetrierenden Gewinden und konjugierten Profilen umfasst.

10. Verfahren nach Anspruch 9, **dadurch gekennzeichnet, dass** es einen Schritt der Einstellung der Drehzahl der Schnecken des Doppelschneckenextruders (10,20) je nach den Abmessungen des coextrudierten Profils P umfasst.

11. Verfahren nach einem der Ansprüche 9 oder 10, **dadurch gekennzeichnet, dass** die von jedem Doppelschneckenextruder (10,20) zugeführte Durchflussmenge größer als 20 kg/min bei einer Geschwindigkeit von weniger als oder gleich 40 U/min ist.

## Claims

1. Extrusion apparatus intended for the manufacture of a coextruded profiled element P for tyres, produced from rubber compounds of various compositions, comprising a profiling device (30) arranged at the outlet of at least two flow channels (34, 35) for rubbery compounds of different composition, **characterized in that** the said channels receive the compounds from positive-displacement contrarotating twin-screw extruders (10, 20), the screw flights interpenetrating and having conjugated profiles.

2. Apparatus according to Claim 1, **characterized in that** each twin-screw extruder (10, 20) is fed by a secondary, single-screw, extruder (40, 50).

3. Apparatus according to Claim 2, **characterized in that** the twin-screw extruder (10, 20) and the secondary extruder (40, 50) are arranged in a common housing (40', 50').

4. Apparatus according to Claim 3, **characterized in that** the secondary extruder (40, 50) comprises an outlet end (43, 53) which communicates with a central inlet orifice (16, 26) into an internal chamber (14, 24) of the twin-screw extruder (10, 20).

5. Apparatus according to one of Claims 2 to 4, **characterized in that** the twin-screw extruder (10, 20) and the secondary extruder (40, 50) each have their own drive means.

6. Apparatus according to one of Claims 2 to 5, **characterized in that** the axis of rotation (X-X'; Y-Y') of the screw of the secondary extruder (40, 50) is transverse to the axis of rotation (A-A',B-B'; C-C',D-D') of the screws of the twin-screw extruder (10, 20).

7. Apparatus according to one of the preceding claims, **characterized in that** it comprises a control unit (60) intended to adjust the rotational speed of the screws of the said twin-screw extruders (10, 20) to suit the dimensions of the coextruded profiled element.

8. Apparatus according to Claim 7, **characterized in that** the said control unit (60) adjusts the rotational speed of the screws of the said twin-screw extruders (10, 20) to make it suit the operating conditions of an ancillary assembly line.

9. Method for the manufacture of a coextruded profiled element P for tyres, produced from rubber compounds of various compositions, by extrusion through a profiling tool (30) coming from two compound flow channels (34, 35), **characterized in that** it comprises a step of feeding the said channels, which is performed by positive-displacement contrarotating twin-screw extruders (10, 20), the screw flights interpenetrating and having conjugated profiles.

10. Method according to Claim 9, **characterized in that** it comprises a step of adjusting the rotational speed of the screws of the twin-screw extruder (10, 20) to suit the dimensions of the coextruded profiled element P.

11. Method according to one of Claims 9 and 10, **characterized in that** the flow rate supplied by each twin-screw extruder (10, 20) is greater than 20 kg/min for a speed less than or equal to 40 rpm.
